# EUROPEAN PATENT SPECIFICATION

(11) **EP 3 597 964 B1**
(45) Date of publication and mention of the grant of the patent: **02.06.2021**
(21) Application number: 18767568.1
(22) Date of filing: 06.03.2018
(51) Int. Cl.: F16H 9/18, F16H 55/56, F16H 61/66, F16H 63/06

(54) **BELT-TYPE CONTINUOUSLY VARIABLE TRANSMISSION**
STUFENLOSES RIEMENGETRIEBE
TRANSMISSION À VARIATION CONTINUE DE TYPE COURROIE

(30) Priority: 16.03.2017 JP 2017051903
(43) Date of publication of application: 22.01.2020
(73) Proprietor: Honda Motor Co., Ltd., Tokyo 107-8556 (JP)
(72) Inventor: MATSUURA, Kohei, Wako-shi Saitama 351-0193 (JP); ADACHI, Jun, Wako-shi Saitama 351-0193 (JP); HAYASHI, Tensei, Wako-shi Saitama 351-0193 (JP); MORITA, Go, Wako-shi Saitama 351-0193 (JP); TOKITO, Akira, Wako-shi Saitama 351-0193 (JP)
(74) Representative: Kiwit, Benedikt
(86) International application number: PCT/JP2018/008577
(87) International publication number: WO 2018/168575

(56) References cited:
- EP-A1- 2 853 781
- WO-A1-2015/076333
- FR-E- 84 027
- JP-A- 2011 163 470
- JP-A- 2012 047 292
- JP-A- 2013 210 078
- JP-A- 2013 210 080
- US-A1- 2015 126 316

## Description

### TECHNICAL FIELD

The present invention relates to a belt-type continuously variable transmission that includes a fixed sheave that is fixed to a crankshaft, a movable sheave that is supported on the crankshaft so as to be movable in an axial direction of the crankshaft while being made to face the fixed sheave, a belt that is wound around a pulley formed by the fixed sheave and the movable sheave, a speed change member that is relatively non-displaceably disposed with respect to the fixed sheave in the axial direction and has a cam face that approaches the fixed sheave in going away from a rotational axis of the crankshaft, and a centrifugal weight that is sandwiched between the speed change member and the movable sheave and moves along the cam face in a centrifugal direction in response to an increase in centrifugal force to thus drive the movable sheave in the axial direction.

### BACKGROUND ART

JP 2014 - 196 775 A discloses a V-belt-type continuously variable transmission. The V-belt-type continuously variable transmission includes a first shift mechanism that drives a movable sheave in the axial direction based on a centrifugal weight and a second shift mechanism that drives the movable sheave in the axial direction in response to operation of an actuator. The actuator converts the rotational power of a motor into linear movement in the axial direction by a screw feed action. The movable sheave is driven based on the rotational power of the motor.

FR 84 027 E discloses a variable speed drive with an extendable pulley, which makes it possible to change from one speed to a higher speed by releasing, by means of an exciter pulse given to an electromagnet, a mechanism, including centrifugal weights. In this way, it is possible to change between continuously variable transmission and a locked gear ratio.

### SUMMARY OF THE INVENTION

### PROBLEMS TO BE SOLVED BY THE INVENTION

In the V-belt-type continuously variable transmission described in JP 2014 - 196 775 A, rotational movement of the motor is converted into linear movement of the movable sheave by using feed. Since a male thread and a female thread are in plane contact, a large driving force is required for the motor when driving the movable sheave. Furthermore, since the motor and the screw feed mechanism are employed, the structure is complicated, and the cost increases.

The present invention has been accomplished in light of the above circumstances, and it is an object thereof to provide a belt-type continuously variable transmission that can fix a gear ratio with an inexpensive structure.

### MEANS FOR SOLVING THE PROBLEMS

According to a first aspect of the present invention, there is provided a belt-type continuously variable transmission comprising a fixed sheave that is fixed to a crankshaft, a movable sheave that is supported on the crankshaft so as to be movable in an axial direction of the crankshaft while being made to face the fixed sheave, a belt that is wound around a pulley formed by the fixed sheave and the movable sheave, a speed change member that is relatively non-displaceably disposed with respect to the fixed sheave in the axial direction and has a cam face that approaches the fixed sheave in going away from a rotational axis of the crankshaft, a centrifugal weight that is sandwiched between the speed change member and the movable sheave and moves along the cam face in a centrifugal direction in response to an increase in centrifugal force to thus drive the movable sheave in the axial direction, an amplification member that is mechanically linked to the movable sheave and has a plurality of restriction bodies, which are arranged in one line so as to cover a speed range from a lowest speed level to a highest speed level and which are moving on a specific trajectory with an amount of displacement that is obtained by amplifying the amount of displacement in the axial direction of the movable sheave, and a lock member that is configured to be displaced linearly between a first position at which the lock member comes into contact with any one of the restriction bodies of the amplification member to thus restrict movement of the restriction body, restrict rotation of the amplification member and prevent movement of the movable sheave, thereby fixing a gear ratio corresponding to the one restriction body and a second position at which the lock member disengages from the restriction body to thus allow movement of the restriction body.

Further according to the first aspect of the present invention the amplification member rotates around a rotational axis and has the restriction bodies arranged along an arc that is concentric with the rotational axis, and the lock member is linked to a solenoid actuator comprising an operating shaft that has an axis parallel to the rotational axis.

According to a second aspect of the present invention, in addition to the first aspect, the belt-type continuously variable transmission further comprises a first body that supports the lock member at a first position in the axial direction and a second body that supports the lock member at a second position that is spaced from the first position in the axial direction, and the lock member engages with the restriction body between the first body and the second body.

According to a third aspect of the present invention, in addition to any one of the first to second aspects, the belt-type continuously variable transmission further comprises an elastic body that applies a driving force to the amplification member around the rotational axis in a direction in which the movable sheave is moved away from the fixed sheave, the restriction bodies are arranged on the amplification member in one line from a low speed level to a high speed level along an arc concentric with the rotational axis, and the amplification member has a weight distribution such that the amplification member rotates around the rotational axis due to an own weight thereof when the lock member is disengaged and such that the amplification member positions the restriction body at the lowest speed level on a path of the lock member.

According to a fourth aspect of the present invention, in addition to any one of the first to third aspects, the belt-type continuously variable transmission comprises a motion conversion mechanism that has an arm extending from the movable sheave through the fixed sheave and joined to a linking member via an extremity thereof and that converts displacement in the axial direction of the linking member into displacement on the trajectory of the restriction body.

### EFFECTS OF THE INVENTION

In accordance with the first aspect, when rotation of the crankshaft is increased in speed, the centrifugal force acting on the centrifugal weight increases, and the centrifugal weight moves in the centrifugal direction. The movable sheave approaches the fixed sheave. As a result, the trajectory radius of the belt increases, and the gear ratio decreases. Due to movement of the centrifugal weight a continuously variable transmission function is realized. In this arrangement, the amount of displacement in the axial direction of the movable sheave is converted into an amount of displacement of the restriction body moving on a specific trajectory. When the lock member comes into contact with any of the restriction bodies to thus restrict movement of the restriction body, movement of the movable sheave is prevented. As a result, the gear ratio is fixed. In this way, due to the action of the lock member it is possible to switch between a continuously variable transmission function and a fixed gear ratio. Moreover, since the amount of displacement in the axial direction of the movable sheave is amplified and converted into an amount of displacement of the restriction body, it is possible to finely set the amount of change of the fixed gear ratio without making the restriction body and the lock member small. It is thus possible to ensure a sufficient strength for the restriction body and the lock member.

Further in accordance with the first aspect, movement of the restriction body is restricted by the action of the solenoid actuator, which realizes linear motion of the operating shaft. Since the operating shaft of the solenoid actuator only moves linearly, control of a fixed gear ratio is simplified. Moreover, since the operating shaft of the solenoid actuator only receives a force from a direction orthogonal to the axis thereof, even if no force is applied to the operating shaft in the axial direction, it is possible to maintain a fixed gear ratio with a simple structure.

In accordance with the second aspect, since the lock member is doubly supported, by the first body and the second body, even if a load is applied to the lock member from a direction orthogonal to the axis thereof, the load acting from the lock member on the solenoid actuator is suppressed. The durability of the solenoid actuator is improved.

In accordance with the third aspect, by virtue of the action of the elastic body a driving force that makes the restriction body at the lowest speed level be positioned on the path of the lock member is applied to the amplification member. In addition thereto, by virtue of the action of the weight distribution, a rotational power that makes the restriction body at the lowest speed level be positioned on the path of the lock member is generated in the amplification member based on gravitational acceleration. In this way, the amplification member can easily recover from an attitude in which the restriction body at the highest speed level is positioned on the path of the lock member to an attitude in which the restriction body at the lowest speed level is positioned on the path of the lock member. By virtue of the action of the weight distribution the resilient force of the elastic member can be decreased.

In accordance with the fourth aspect, since the arm extends in the axial direction of the crankshaft, extends through the fixed sheave, and is joined to the linking member, compared with a case in which the arm is joined to the linking member by circumventing the fixed sheave, the structure of the arm is simplified, and any increase in the dimension of the mechanism toward the radially outer side of the fixed sheave can be avoided.

### BRIEF DESCRIPTION OF DRAWINGS

[FIG. 1] FIG. 1 is a side view schematically showing the overall structure of a scooter type two-wheeled motor vehicle related to one embodiment, (first embodiment)
[FIG. 2] FIG. 2 is an enlarged sectional view of a drive unit related to a first embodiment, (first embodiment)
[FIG. 3] FIG. 3 is an enlarged partial sectional view of FIG. 2. (first embodiment)
[FIG. 4] FIG. 4 is an enlarged sectional view along line 4-4 in FIG. 3 and schematically shows an amplification member. (first embodiment)
[FIG. 5] FIG. 5 is an enlarged partial sectional view, corresponding to FIG. 3, showing a modified example of a second shift mechanism, (first embodiment)
[FIG. 6] FIG. 6 is an enlarged partial sectional view schematically showing the arrangement of a second shift mechanism related to a second embodiment, (second embodiment)
[FIG. 7] FIG. 7 is a schematic diagram schematically showing the function of a first cam member and a second cam member. (second embodiment)
[FIG. 8] FIG. 8 is an enlarged partial sectional view schematically showing the arrangement of a second shift mechanism related to a third embodiment, (third embodiment)

### EXPLANATION OF REFERENCE NUMERALS AND SYMBOLS

- 32: Crankshaft

- 67: Pulley (drive pulley device)
- 71: Fixed sheave
- 72: Movable sheave
- 73: Belt (V-belt)
- 76: Centrifugal weight
- 78: Solenoid actuator
- 89: Speed change member (weight retaining plate)
- 89a: Cam face
- 91: Motion conversion mechanism
- 92: Restriction body
- 93: Amplification member
- 94: Lock member
- 102: Linking member (ring member)
- 103: Arm
- 115: First body
- 116: Second body
- 122: Elastic body (spring member)
- 154: Elastic body (return spring)
- 163: Restriction body
- 164: Amplification member
- 165: Lock member
- 173: Solenoid actuator
- Xis: Rotational axis (of crankshaft)
- Xp: Rotational axis (axis of swing shaft)

### MODES FOR CARRYING OUT THE INVENTION

One embodiment of the present invention is explained below by reference to the attached drawings. In the explanation below, the fore-and-aft, up-and-down, and left-and-right directions are directions as viewed by a person riding a two-wheeled motor vehicle.

### First embodiment

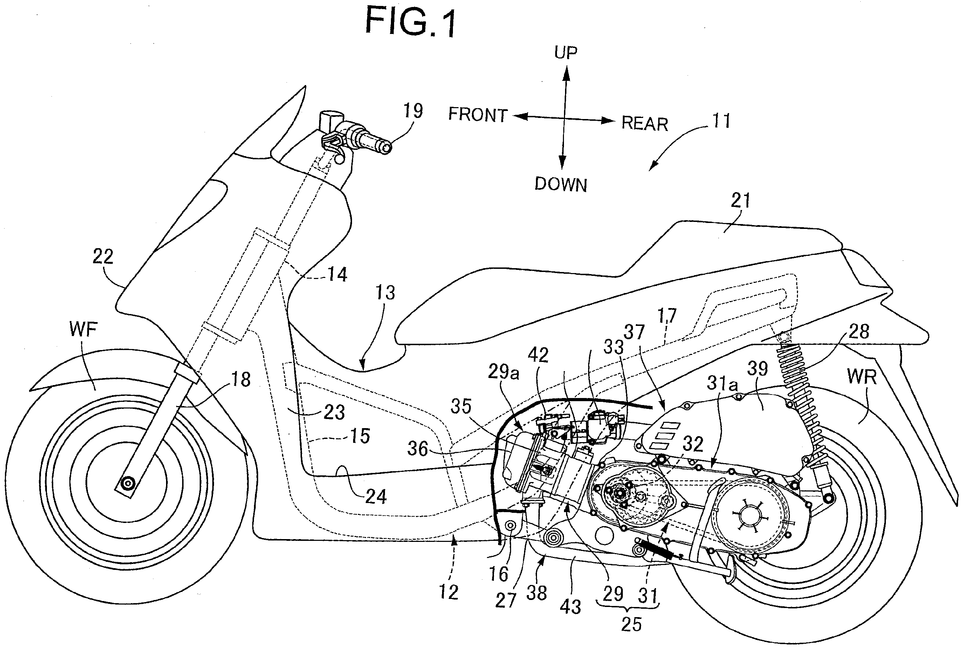

FIG. 1 schematically shows a scooter type two-wheeled motor vehicle related to one embodiment of a saddle-ridden vehicle. The two-wheeled motor vehicle 11 includes a body frame 12 and a body cover 13. The body frame 12 includes a head pipe 14 at the front end, a main frame 15 joined to the head pipe 14 via its front end, a cross pipe 16 joined to a rear part of the main frame 15 and extending in the vehicle width direction, and a pair of left and right rear frames 17 having front end parts connected to opposite end parts of the cross pipe 16 and extending in the vehicle fore-and-aft direction. A front fork 18 supporting a front wheel WF so that it can rotate around a horizontal axis and rod-shaped handlebars 19 are steerably supported on the head pipe 14.

The body cover 13 is fitted onto the body frame 12. A rider's seat 21 is mounted on the body cover 13 above the rear frame 17. The body cover 13 includes a front cover 22 that covers the head pipe 14 from the front, a leg shield 23 that is continuous from the front cover 22, and a step floor 24 that is continuous from the lower end of the leg shield 23 and is disposed above the main frame 15 between the rider's seat 21 and the front wheel WF.

A unit-swing type drive unit 25 is disposed in a space beneath the rear frame 17. The drive unit 25 is vertically swingably linked, via a link 27, to a bracket 26 joined to the front end of the rear frame 17. A rear wheel WR is supported by the rear end of the drive unit 25 so that it can rotate around a horizontal axis. A rear cushion unit 28 is disposed between the rear frame 17 and the drive unit 25 at a position spaced from the link 27 and the bracket 26. The drive unit 25 includes an air-cooled single-cylinder engine 29 and a transmission device 31 that is connected to the engine 29 and the rear wheel WR and transmits output from the engine 29 to the rear wheel WR. A transmission case 31 a of the transmission device 31 is joined to an engine main body 29a of the engine 29.

The engine main body 29a of the engine 29 includes a crankcase 33 that supports a crankshaft 32 so that it can rotate around a rotational axis, a cylinder block 34 that is joined to the crankcase 33, a cylinder head 35 that is joined to the cylinder block 34, and a head cover 36 that is joined to the cylinder head 35. An intake device 37 and an exhaust device 38 are connected to the cylinder head 35. The intake device 37 includes an air cleaner 39 that is supported on the transmission case 31a and a throttle body 41 that is disposed between the air cleaner 39 and the cylinder head 35. A fuel injection valve 42 is mounted on an upper side wall of the cylinder head 35. The exhaust device 38 includes an exhaust pipe 43 that extends rearward from a lower side wall of the cylinder head 35 while passing beneath the engine main body 29a, and an exhaust muffler (not illustrated) that is connected to the downstream end of the exhaust pipe 43 and is linked to the crankcase 33.

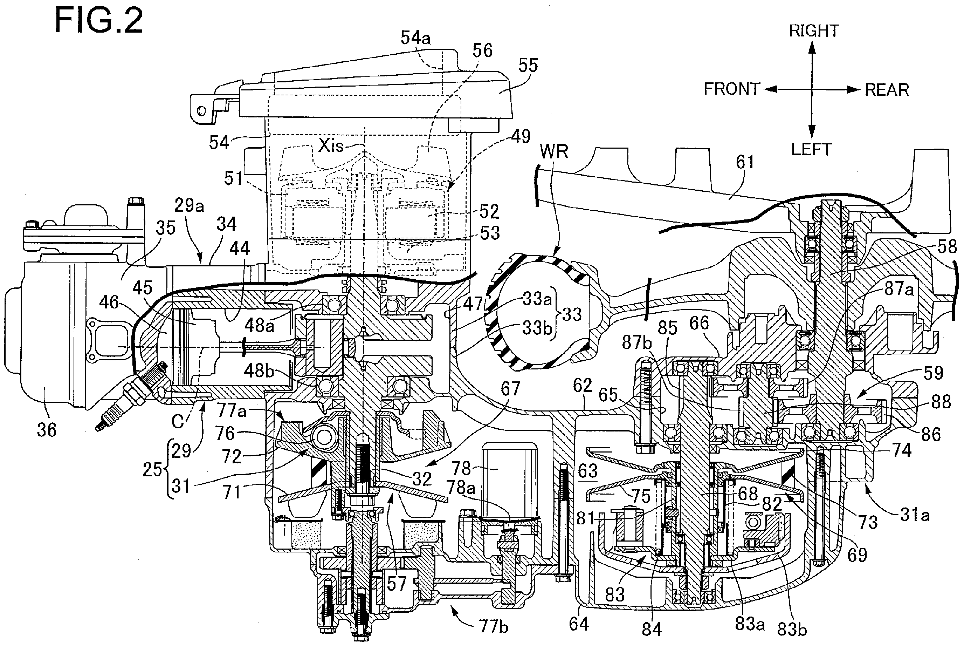

As shown in FIG. 2, a cylinder bore 44 is defined in the cylinder block 34. A piston 45 is slidably fitted into the cylinder bore 44 along a cylinder axis C. The cylinder axis C is inclined slightly upward to the front. The crankshaft 32 is linked to the piston 45. A rotational axis Xis of the crankshaft 32 is oriented in the vehicle width direction.

A combustion chamber 46 is defined in the cylinder head 35. The combustion chamber 46 is continuous from the cylinder bore 44. The piston 45 faces the cylinder head 35 and defines the combustion chamber 46 between itself and the cylinder head 35. An air-fuel mixture is introduced into the combustion chamber 46 via the intake device 37. Exhaust gas within the combustion chamber 46 is discharged via the exhaust device 38.

The crankcase 33 is divided into a first case half 33a and a second case half 33b. The first case half 33a and the second case half 33b define in cooperation a crank chamber 47. A crank of the crankshaft 32 is housed in the crank chamber 47. The first case half 33a has a bearing 48a that rotatably supports the crankshaft 32 whereas the second case half 33b has a bearing 48b that rotatably supports the crankshaft 32.

A generator 49 is joined to the crankcase 33. The generator 49 includes a tubular rotor 51 that is fixed to the crankshaft 32 extending through the first case half 33a of the crankcase 33 and protruding out of the first case half 33a, and a stator 52 that is surrounded by the rotor 51 and is disposed around the crankshaft 32. The stator 52 is fixed to a support plate 53 fastened to the first case half 33a. The generator 49 generates current in response to relative rotation of the rotor 51 and the stator 52.

A tubular generator cover 54 surrounding the generator 49 is joined to the first case half 33a. An air inlet 54a is defined at an open end of the generator cover 54. A radiator 55 is disposed in the air inlet 54a. A cooling fan 56 is joined to an outer face of the rotor 51. The cooling fan 56 rotates in response to the rotation of the crankshaft 32, and cooling air flows toward the radiator 55.

The transmission device 31 includes an electronically controlled V-belt-type continuously variable transmission (hereinafter called a 'transmission') 57 that is housed within the transmission case 31a and steplessly changes the speed of rotational power transmitted from the crankshaft 32, and a reduction gear mechanism 59 that is housed within the transmission case 31a, reduces the speed of rotational power of the transmission 57, and transmits it to an axle 58 of the rear wheel WR. The rear wheel WR is disposed between the transmission case 31a and a support arm 61. The support arm 61 is continuous from the crankcase 33 and extends to the rear of the vehicle. The exhaust muffler described above is mounted on the support arm 61. The axle 58 of the rear wheel WR is doubly supported, on the transmission case 31a and on the support arm 61, so that it can rotate around its axis.

The transmission case 31a includes a case main body 62 that is continuous from the second case half 33b of the crankcase 33, a case cover 64 that is fastened to the case main body 62 and defines a transmission chamber 63 between itself and the case main body 62, and a gear cover 66 that is fastened to the case main body 62 and defines a gear chamber 65 between itself and the case main body 62. The transmission 57 is housed in the transmission chamber 63. The reduction gear mechanism 59 is housed in the gear chamber 65. The case main body 62 and the case cover 64 in cooperation form a transmission case.

The transmission 57 includes a drive pulley device 67 that is disposed within the transmission chamber 63 and is mounted on the crankshaft 32 as a drive shaft, and a driven pulley device 69 that is disposed within the transmission chamber 63 and is mounted on a driven shaft 68 protruding from the transmission chamber 63 into the gear chamber 65. In the drive pulley device 67, the drive pulley is formed from a fixed sheave 71 that is fixed to the crankshaft 32 and a movable sheave 72 that is supported on the crankshaft 32 so that it can move in the axial direction of the crankshaft 32 while facing the fixed sheave 71. A V-belt 73 is wound around the drive pulley. The movable sheave 72 is disposed between the second case half body 33b of the crankcase 33 and the fixed sheave 71.

Similarly, in the driven pulley device 69 the driven pulley is formed from a fixed sheave 74 that is coaxially fitted around the driven shaft 68 and a movable sheave 75 that is coaxially fitted around the driven shaft 68 while facing the fixed sheave 74. The V-belt 73 is wound around the driven pulley. The belt winding diameter of the driven pulley device 69 changes in response to a change in the belt winding diameter of the drive pulley device 67.

The transmission 57 includes a first shift mechanism 77a that changes a gear ratio from the lowest speed level (maximum gear ratio) to the highest speed level (minimum gear ratio) based on the centrifugal force of a centrifugal weight 76, and a second shift mechanism 77b that includes a solenoid actuator 78 equipped with an operating shaft 78a having an axis parallel to the rotational axis Xis. Axial movement of the movable sheave 72 is realized in response to operation of the first shift mechanism 77a and the second shift mechanism 77b, and the winding radius of the V-belt 73 is changed.

The driven pulley device 69 includes an inner tube 81 that has a cylindrical shape coaxial with the driven shaft 68 and is coaxially fitted around the driven shaft 68, and an outer tube 82 that has a cylindrical shape coaxial with the driven shaft 68 and is coaxially fitted around the inner tube 81. The inner tube 81 is relatively rotatably supported on the driven shaft 68. The outer tube 82 is relatively rotatably and axially relatively displaceably supported on the inner tube 81. The fixed sheave 74 is coaxially fixed to the inner tube 81. The inner tube 81 and the fixed sheave 74 are formed as a unit from a material that is lighter than steel, such as for example aluminum. The movable sheave 75 is coaxially fixed to the outer tube 82. The outer tube 82 and the movable sheave 75 are formed as a unit from a material that is lighter than steel, such as for example aluminum. The movable sheave 75 moves closer to the fixed sheave 74 or moves away from the fixed sheave 74 according to relative displacement in the axial direction between the outer tube 82 and the inner tube 81.

A centrifugal clutch 83 is fitted around the driven shaft 68. The centrifugal clutch 83 includes a clutch plate 83a that is fixed to the inner tube 81. A coil spring 84 is disposed between the clutch plate 83a and the movable sheave 75. The coil spring 84 exhibits a resilient force that pushes the movable sheave 75 toward the fixed sheave 74. When the winding radius of the V-belt 73 increases for the drive pulley device 67, in the driven pulley device 69 the movable sheave 75 moves away from the fixed sheave 74 against the resilient force of the coil spring 84 and the winding radius of the V-belt 73 decreases.

The centrifugal clutch 83 includes an outer plate 83b that is fixed to the driven shaft 68. The outer plate 83b faces the clutch plate 83a. When the clutch plate 83a rotates, the outer plate 83b is joined to the clutch plate 83a by the action of centrifugal force. Rotation of the driven pulley device 69 is thus transmitted to the driven shaft 68. When the engine rotational speed exceeds a set rotational speed, the centrifugal clutch 83 establishes a power transmission state.

The reduction gear mechanism 59 includes a drive gear 85 fixed to the driven shaft 68 protruding into the gear chamber 65, a final gear 86 fixed to the axle 58 of the rear wheel WR, and idle gears 87a and 87b disposed between the drive gear 85 and the final gear 86. The idle gears 87a and 87b are fixed to a common intermediate shaft 88. The drive gear 85 meshes with the idle gear 87a, and the final gear 86 meshes with the idle gear 87b. In this way, rotation of the driven shaft 68 is reduced in speed and transmitted to the axle 58 of the rear wheel WR.

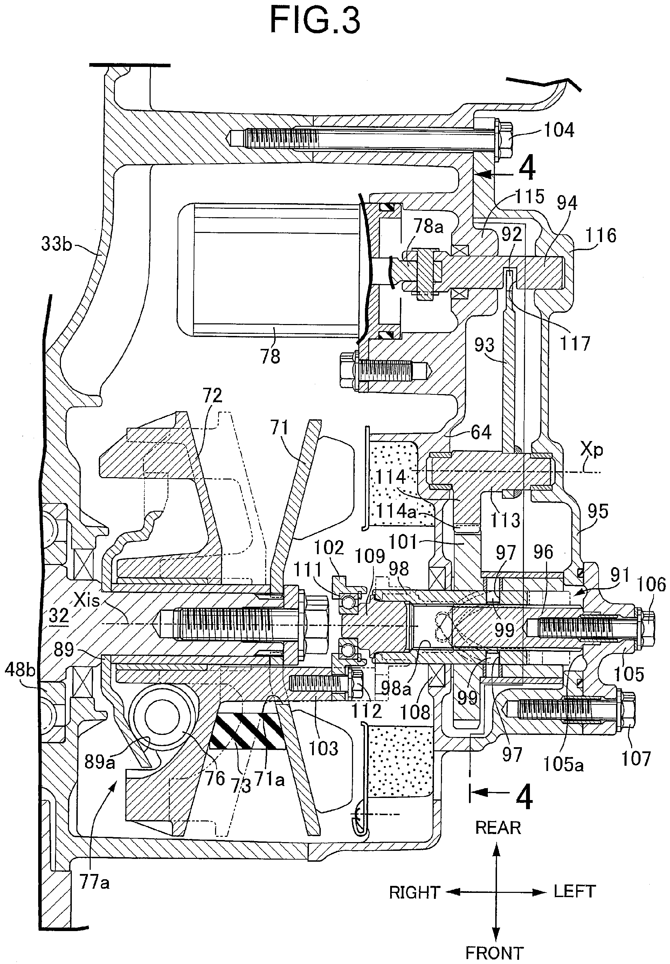

As shown in FIG. 3, the first shift mechanism 77a includes a weight retaining plate (speed change member) 89 that is relatively non-displaceably disposed with respect to the fixed sheave 71 in the axial direction and has a cam face 89a that approaches the fixed sheave 71 in going away from the rotational axis Xis of the crankshaft 32. The centrifugal weight 76 is sandwiched between a back face of the movable sheave 72 and the cam face 89a of the weight retaining plate 89. The centrifugal weight 76 is retained between the weight retaining plate 89 and the movable sheave 72 so that it can be displaced in the radial direction of the movable sheave 72. When the rotational speed of the movable sheave 72 increases, the centrifugal weight 76 moves along the cam face 89a in the centrifugal direction in response to an increase in the centrifugal force and drives the movable sheave 72 in the axial direction. When the centrifugal weight 76 thus moves away from the rotational axis Xis of the crankshaft 32 in the radial direction along the cam face 89a, the movable sheave 72 moves forward toward the fixed sheave 71. When the rotational speed of the movable sheave 72 decreases, the centrifugal weight 76 approaches the rotational axis Xis along the cam face 89a in response to a decrease in the centrifugal force, and as a result the movable sheave 72 retreats (moves away) from the fixed sheave 71.

The second shift mechanism 77b includes a motion conversion mechanism 91 that converts linear movement of the movable sheave 72 in the axial direction into rotational movement around the rotational axis Xis, an amplification member 93 that is linked to the movable sheave 72 through the motion conversion mechanism 91 and has a plurality of restriction bodies 92 moving on a specific trajectory with a defined amount of displacement, and a lock member 94 that is linearly displaced between a first position at which it comes into contact with any of the restriction bodies 92 to thus restrict movement of the restriction body 92 and a second position at which it disengages from the restriction body 92 to thus allow movement of the restriction body 92.

The motion conversion mechanism 91 includes a support shaft 96 that is fixed to a conversion mechanism cover 95 so as to be coaxial with the crankshaft 32 at a position shifted from the crankshaft 32 in the axial direction, a sleeve 98 that is fitted around the support shaft 96 so as to be displaceable in the axial direction and has a cam groove 97 on its outer peripheral face, a transmission gear 101 that has a shaft body 99 fitted into the cam groove 97 and is fitted to the sleeve 98 so that it can rotate around the axis (rotational axis Xis) of the support shaft 96, a ring member (linking member) 102 that is supported on the sleeve 98 so that it is non-displaceable in the axial direction but can undergo relative rotation around the axis, and an arm 103 that is formed integrally with the movable sheave 72 and is joined to the ring member 102 via its extremity.

The conversion mechanism cover 95 is joined to an outer face of the case cover 64. The conversion mechanism cover 95 may be fastened to the case cover 64 by means of for example a bolt 104. A space for housing the transmission gear 101 and the amplification member 93 is defined between the conversion mechanism cover 95 and the case cover 64. When fixing the support shaft 96 an auxiliary cover 105 is joined to the conversion mechanism cover 95. The support shaft 95 is fixed to the auxiliary cover 105 by means of a bolt 106. The auxiliary cover 105 is fastened to the conversion mechanism cover 95 by means of a bolt 107.

The support shaft 96 is inserted into a shaft hole 98a of the sleeve 98. For example, a spline is incised between an inner peripheral face of the shaft hole 98a and an outer peripheral face of the support shaft 96. The spline prevents relative rotation between the sleeve 98 and the support shaft 96. The sleeve 98 is displaced on the support shaft 96 in the axial direction between the lowest speed position, at which it is the closest to the crankshaft 32, and the highest speed position, at which it is the furthest from the crankshaft 32. The auxiliary cover 105 has a restriction portion 105a that restricts movement in the axial direction of the sleeve 98, which is disposed on the inside, in the vehicle width direction, of the auxiliary cover 105. The restriction portion 105a of the auxiliary cover 105 abuts against the outer end of the sleeve 98 in the axial direction and restricts movement of the sleeve 98 beyond the highest speed position.

The sleeve 98 extends liquid-tightly through the case cover 64. An oil seal 108 is fitted around the outer periphery of the sleeve 98. An extremity member 109 is fixed to one end of the sleeve 98 inside the case cover 64. The ring member 102 is supported on the extremity member 109 so that it can undergo relative rotation around the rotational axis Xis via a ball bearing 111. The extremity member 109 is press fitted into an inner race of the ball bearing 111. Movement of the extremity member 109 with respect to the ring member 102 is restrained in the axial direction. The extremity member 109 moves integrally with the ring member 102 in the axial direction.

The arm 103 extends from the movable sheave 75 in a direction in which it goes away from the second half body 33b of the crankcase 33. The arm 103 extends through the fixed sheave 71 and is received by the ring member 102 via its extremity. A hole 71a is formed in the fixed sheave 71, the hole 71a allowing the arm 103 to extend therethrough. The extremity of the arm 103 is linked to the ring member 102 by means of a bolt 112. Axial displacement of the movable sheave 72 thus induces axial displacement of the ring member 102. The ring member 102 rotates around the rotational axis Xis in synchronism with the crankshaft 32 but the sleeve 98 is prevented from rotating. In this embodiment the arm 103 may be formed as a separate body from the movable sheave 75 and be fixed to the movable sheave 75, may be formed integrally with the ring member 102, or may be linked to the sleeve 98 so that it can undergo relative rotation around the rotational axis Xis. The relationship with which the arm 103 and the sleeve 98 are linked may be modified in a variety of ways.

The cam groove 97 is formed from an elongated hole defined in the sleeve 98. The elongated hole is formed into a shape such that the angular position changes to a prescribed rotational direction in going away from the crankshaft 32. A driving force around the rotational axis Xis is applied to a shaft body 99 from a side wall of the elongated hole. The shaft body 99 moves around the rotational axis Xis in response to axial movement of the sleeve 98. The transmission gear 101 thus rotates around the rotational axis Xis.

The amplification member 93 includes a swing shaft 113 that has an axis parallel to the rotational axis Xis, and a follower gear 114 that has gear teeth 114a arranged along an arc coaxial with an axis Xp of the swing shaft 113 at a position spaced from the swing shaft 113 in the centrifugal direction. The swing shaft 113 is supported on the case cover 64 and the conversion mechanism cover 95 so that it can rotate around the axis Xp. The swing shaft 113 is doubly supported on the case cover 64 and on the conversion mechanism cover 95. The transmission gear 101 meshes with the follower gear 114. In this way rotational power of the sleeve 98 is transmitted to the amplification member 93.

The lock member 94 is formed into a columnar body having an axis parallel to the rotational axis Xis. The columnar body is supported on a first body 115 formed integrally with the case cover 64 at a first position in the axial direction, and is supported on a second body 116 formed integrally with the conversion mechanism cover 95 at a second position that is spaced from the first position in the axial direction. A cutout 117 is formed in the lock member 94 between the first body 115 and the second body 116.

The lock member 94 is linked to the operating shaft 78a of the solenoid actuator 78. The solenoid actuator 78 moves the lock member 94 between the first position and the second position by virtue of an electromagnetic force resulting from electric power being supplied. When the lock member 94 is positioned at the first position, the cutout 117 deviates from the trajectory of the restriction body 92. When the lock member 94 is positioned at the second position, the cutout 117 is disposed on the trajectory of the restriction body 92.

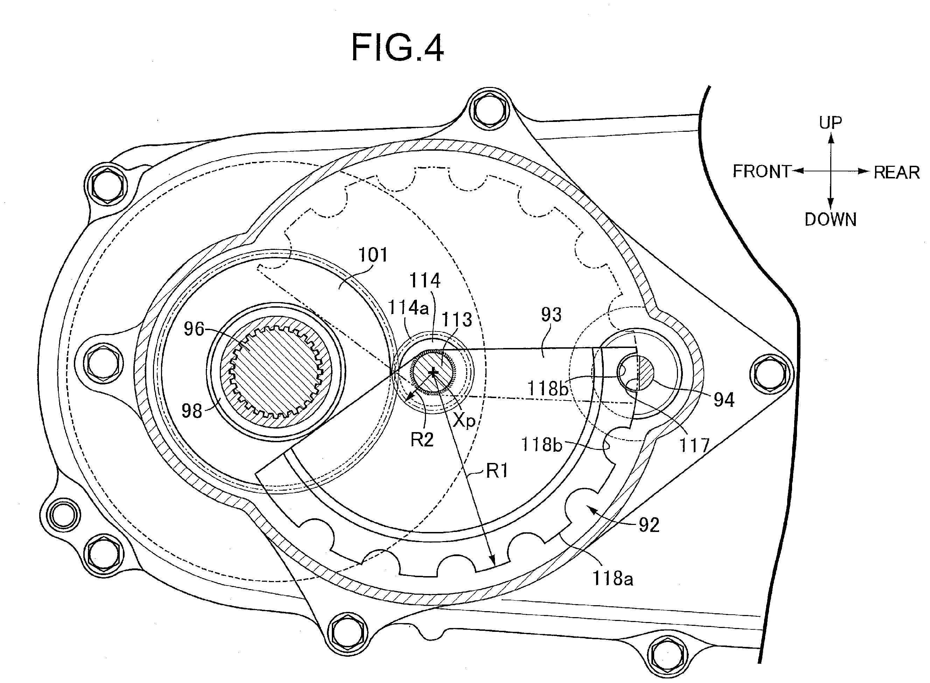

As shown in FIG. 4, the amplification member 93 is formed into a fan shape having a central angle that is smaller than 180 degrees. The restriction bodies 92 are arranged in one line from the lowest speed level toward the highest speed level along an arc 118a concentric with the axis Xp of the swing shaft 113. The restriction bodies 92 may be arranged at equal intervals. Individual restriction bodies 92 are formed as a depression 118b that is recessed into a semi-circular shape from the edge of the arc 118a to the axis Xp side. The lock member 94 at the first position enters the depression 118b and engages with the restriction body 92 between the first body 115 and the second body 116. In this arrangement a distance R1 from the axis Xp of the swing shaft 113 to the restriction body 92 is set larger than a distance R2 from the axis Xp of the swing shaft 113 to the gear teeth 114a of the follower gear 114. The amount of displacement of the gear teeth 114a is therefore amplified according to the distance ratio (= R1/R2) and converted into an amount of displacement of the restriction body 92.

The operation of the transmission 57 is now explained. When the two-wheeled motor vehicle 11 travels, in the drive pulley device 67 the movable sheave 72 is the furthest from the fixed sheave 71. The V-belt 73 is the closest to the crankshaft 32. In the driven pulley device 69 the movable sheave 75 is the closest to the fixed sheave 74. The V-belt 73 is the furthest from the driven shaft 68.

In this process, the solenoid actuator 78 retains the lock member 94 at the second position. The amplification member 93 is positioned at an initial angular position around the axis Xp of the swing shaft 113. The restriction body 92 at the lowest speed level is positioned within the cutout 117 of the lock member 94. Therefore, rotation of the amplification member 93 is allowed. The restriction body 92 passes through a space within the cutout 117 in response to rotation of the amplification member 93.

As the rotational speed of the crankshaft 32 increases, in the drive pulley device 67 the centrifugal force acting on the centrifugal weight 76 increases. Due to the action of the cam face 89a the movable sheave 72 moves closer to the fixed sheave 71. The V-belt 73 moves away from the crankshaft 32. In reaction thereto, in the driven pulley device 69 the V-belt 73 moves closer to the driven shaft 68. In the drive pulley device 67 the trajectory radius of the V-belt 73 increases and the gear ratio decreases. Due to movement of the centrifugal weight 76 a continuously variable transmission function is realized from the lowest speed level toward the highest speed level.

When the rotational speed of the movable sheave 72 decreases, the centrifugal weight 76 approaches the rotational axis Xis in response to a decrease in the centrifugal force. The movable sheave 72 moves away from the fixed sheave 71. The V-belt 73 moves closer to the crankshaft 32. In response thereto, in the driven pulley device 69 the V-belt 73 moves away from the driven shaft 68. In the drive pulley device 67 the trajectory radius of the V-belt 73 decreases, and the gear ratio increases. A continuously variable transmission function is realized from a high speed level to the lowest speed level by movement of the centrifugal weight 76.

When the solenoid actuator 78 is energized and a driving force acts on the lock member 94 from the second position toward the first position, the lock member 94 enters the depression 118b via any one of the restriction bodies 92. As a result, movement of the restriction body 92 is restricted. Rotation of the amplification member 93 is restrained. Movement of the movable sheave 72 is prevented. As a result, the gear ratio is fixed. In this way, due to the action of the lock member 94 it is possible to switch between a continuously variable transmission function and a fixed gear ratio.

Moreover, since the amount of displacement in the axial direction of the movable sheave 72 is amplified and converted into an amount of displacement of the restriction body 92, the amount of displacement of the restriction body 92 is enlarged compared with the small amount of displacement of the movable sheave 72. It is possible to finely set the amount of change of the fixed gear ratio without making the restriction body 92 and the lock member 94 small. It is thus possible to ensure a sufficient strength for the restriction body 92 and the lock member 94.

In the present embodiment, the amplification member 93 rotates around the axis Xp of the swing shaft 113 and has the restriction bodies 92 arranged along an arc concentric with the axis Xp of the swing shaft 113. The lock member 94 is linked to the solenoid actuator 78 equipped with the operating shaft 78a having an axis parallel to the axis Xp. Movement of the restriction body 92 is restricted by the action of the solenoid actuator 78, which realizes linear motion of the operating shaft 78a. Since the operating shaft 78a of the solenoid actuator 78 only moves linearly, control of the fixed gear ratio is simplified. Moreover, since the operating shaft 78a of the solenoid actuator 78 only receives a force from a direction orthogonal to the axis thereof, even if no force is applied to the operating shaft 78a in the axial direction, it is possible to maintain a fixed gear ratio with a simple structure.

The lock member 94 is doubly supported on the case cover 64 and on the conversion mechanism cover 95 on opposite sides, in the axial direction, of the trajectory of the restriction body 92. The restriction body 92 engages with the lock member 94 between the first body 115 of the case cover 64 and the second body 116 of the conversion mechanism cover 95. In this way, since the lock member 94 is doubly supported, on the first body 115 and on the second body 116, even if a load is applied to the lock member 94 from a direction orthogonal to the axis thereof, the load acting from the lock member 94 on the solenoid actuator 78 is suppressed. The durability of the solenoid actuator 78 is improved.

Since the arm 103 extends in the axial direction of the crankshaft 32, extends through the fixed sheave 71, and is joined to the ring member 102, compared with a case in which the arm 103 is joined to the ring member 102 by circumventing the fixed sheave 71, the structure of the arm 103 is simplified, and any increase in the dimension of the second shift mechanism 77b toward the radially outer side of the fixed sheave 71 can be avoided.

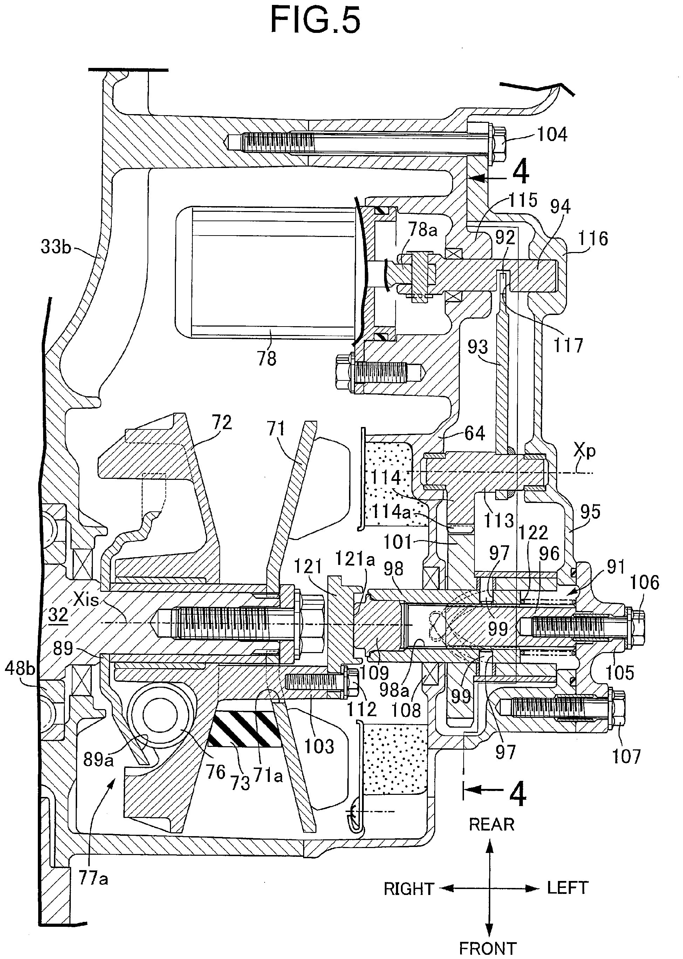

As shown in FIG. 5, in the transmission 57 a slide member 121 may be fixed to the arm 103 instead of the ring member 102 as described above. The slide member 121 includes a slide face 121a orthogonal to the rotational axis Xis. The extremity member 109 of the sleeve 98 is in plane contact with the slide face 121a. When the crankshaft 32 rotates, the extremity face of the extremity member 109 slides on the slide face 121a of the slide member 121 so that it can rotate around the rotational axis Xis. An elastic body that exhibits a resilient force pressing the extremity member 109 against the slide face 121a, that is, a spring member 122, is sandwiched between the sleeve 98 and the auxiliary cover 105.

In the transmission 57, when the movable sheave 72 is displaced toward the fixed sheave 71 in the axial direction, a driving force is applied from the slide member 121 to the sleeve 98 in the axial direction. Displacement in the axial direction of the sleeve 98 against the resilient force of the spring member 122 is realized. When the movable sheave 72 moves away from the fixed sheave 71, the sleeve 98 follows movement of the slide member 121 by virtue of the resilient force of the spring member 122. In this way the amplification member 93 can be detachably linked to the movable sheave 72. The resilient force of the spring member 122 makes the movable sheave 72 move away from the fixed sheave 71.

In the transmission 57, as shown in FIG. 4, the axis of the sleeve 98 (= rotational axis Xis), the axis Xp of the swing shaft 113, and the axis of the lock member 94 are disposed within one horizontal plane. In the amplification member 93, a weight distribution is ensured such that when the lock member 94 is disengaged, the amplification member 93 rotates around the axis Xp of the swing shaft 113 due to its own weight, and the restriction body 92 at the lowest speed level is positioned on the path of the lock member 94. In other words, when the restriction body 92 at the highest speed level is positioned on the path of the lock member 94, a large weight further on the lock member 94 side than a vertical plane containing the axis Xp of the swing shaft 113 is ensured. Due to the weight the amplification member 93 rotates around the axis Xp in one direction. Since the restriction bodies 92 are arranged in one line from the highest speed level to the lowest speed level along the arc concentric with the axis Xp, if the amplification member 93 is formed into a fan shape having a central angle of less than 180 degrees, it is possible to realize the amplification member 93 such that it always rotates in one direction around the axis Xp due to its own weight.

### SECOND EMBODIMENT

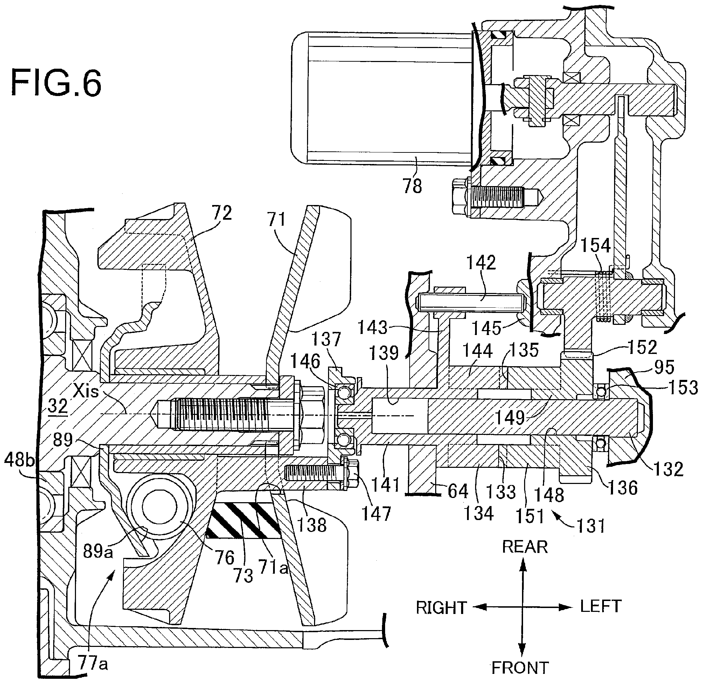

FIG. 6 schematically shows the arrangement of a motion conversion mechanism 131 related to a second embodiment. Reference numerals and symbols that are the same as those in the first embodiment described above refer to the same arrangement as in the first embodiment, and detailed explanation is omitted. The motion conversion mechanism 131 includes a support shaft 132 that is fixed to the conversion mechanism cover 95 so as to be coaxial with the crankshaft 32 at a position shifted from the crankshaft 32 in the axial direction, a drive body 134 that is fitted around the support shaft 132 so that it can be displaced in the axial direction and has a first cam face 133 on an end face, a transmission gear 136 that has on an end face a second cam face 135 that is in contact with the first cam face 133 of the drive body 134 and is fitted around the support shaft 132 so that it can rotate around an axis (= rotational axis Xis) of the support shaft 132, a ring member 137 that is supported on the drive body 134 so that it is non-displaceable in the axial direction but can undergo relative rotation around the rotational axis Xis, and an arm 138 that is formed integrally with the movable sheave 72 and is joined to the ring member 137 via an extremity.

The drive body 134 includes a sleeve 141 that receives the support shaft 132 via a shaft hole 139 and is supported on the support shaft 132 so that it can be displaced in the axial direction, a rotation-preventing arm 143 that extends from the outer periphery of the sleeve 141 in the radial direction and is linked to a fixed shaft 142 via an extremity, and a first cam member 144 that is fitted around the outer periphery of the sleeve 141 and defines the first cam face 133 on an end face. The sleeve 141, the rotation-preventing arm 143, and the first cam member 144 are strongly joined to each other. The sleeve 141 extends liquid-tightly through the case cover 64 and moves on the support shaft 132 in the axial direction between the lowest speed position at which it is the closest to the crankshaft 32 and the highest speed position at which it is the furthest from the crankshaft 32.

The fixed shaft 142 is formed from a columnar body having an axis parallel to the rotational axis Xis. The columnar body is fitted into the case cover 64. The fixed shaft 142 may be doubly supported, by the case cover 64 and by a support member 145 joined to the case cover 64. A tubular body 143a is formed on the rotation-preventing arm 143, the tubular body 143a moving on the fixed shaft 142 in parallel with the rotational axis Xis. The tubular body 143a prevents the sleeve 141 from rotating around the rotational axis Xis.

The ring member 137 is supported on the extremity of the sleeve 141 so that it can undergo relative rotation around the rotational axis Xis via a ball bearing 146 inside the case cover 64. Here, the extremity of the sleeve 141 is press fitted into an inner race of the ball bearing 137. Movement of the sleeve 141 with respect to the ring member 137 is restrained in the axial direction. The sleeve 141 moves in the axial direction integrally with the ring member 137.

The arm 138 extends from the movable sheave 75 in a direction in which it moves away from the second half body 33b of the crankcase 33. The arm 138 extends through the fixed sheave 71 and is received by the ring member 137 via an extremity. The extremity of the arm 138 is linked to the ring member 137 by means of a bolt 147. Displacement in the axial direction of the movable sheave 72 thus induces a displacement in the axial direction of the ring member 137. The ring member 137 rotates around the rotational axis Xis in synchronism with the crankshaft 32 but rotation of the sleeve 141 is prevented.

The transmission gear 136 includes a tubular body 149 that receives the support shaft 132 via a shaft hole 148 and is axially non-displaceably supported on the support shaft 132, and a second cam member 151 that is fitted around the outer periphery of the tubular body 149 and defines the second cam face 135 on an end face. The second cam member 151 is fitted around the outer periphery of the tubular body 149. The tubular body 149 and the second cam member 151 are strongly joined to each other. The tubular body 149 has gear teeth 152 arranged in a ring shape around the rotational axis Xis. The gear teeth 152 mesh with the gear teeth 114a of the follower gear 114. A thrust bearing 153 is sandwiched between the tubular body 149 and the conversion mechanism cover 95 around the support shaft 132. The thrust bearing 153 supports displacement of the tubular body 149 in the axial direction.

An elastic body that applies a driving force to the amplification member 93 around the axis Xp in a direction in which the movable sheave 72 moves away from the fixed sheave 71, that is, a return spring 154, is fitted on the swing shaft 113. The return spring 154 applies a driving force to the swing shaft 113 around the axis Xp. The restriction body 92 at the lowest speed level can be retained on the path of the lock member 94 in response to the resilient force of the return spring 154.

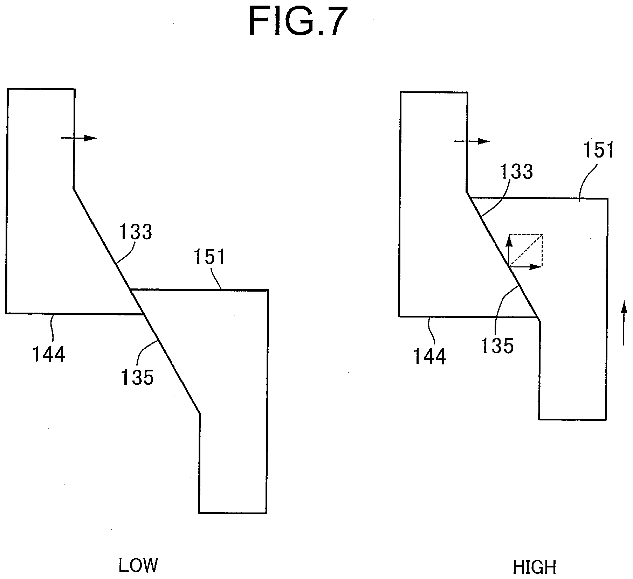

As shown in FIG. 7, the first cam face 133 is inclined toward the second cam member 151 according to change in the angular position around the rotational axis Xis. The second cam face 135 is inclined toward the first cam member 144 according to change in the angular position around the rotational axis Xis. The inclination angles of the first cam face 133 and the second cam face 135 are set so as to be identical with respect to a plane orthogonal to the rotational axis Xis.

When the movable sheave 72 is displaced in the axial direction toward the fixed sheave 71, the drive body 134 is displaced in the axial direction against the resilient force of the return spring 154. In this process, a rotational force is applied from the drive body 134 to the transmission gear 136 around the rotational axis Xis by virtue of the action of the first cam face 133 and the second cam face 135. When the movable sheave 72 moves away from the fixed sheave 71, the second cam face 135 maintains contact with the first cam face 133 by virtue of the action of the resilient force of the return spring 154. Following movement of the first cam face 133 the second cam face 135 moves angularly around the rotational axis Xis. The functions of the solenoid actuator 78 and the restriction body 92 are the same as described above.

### THIRD EMBODIMENT

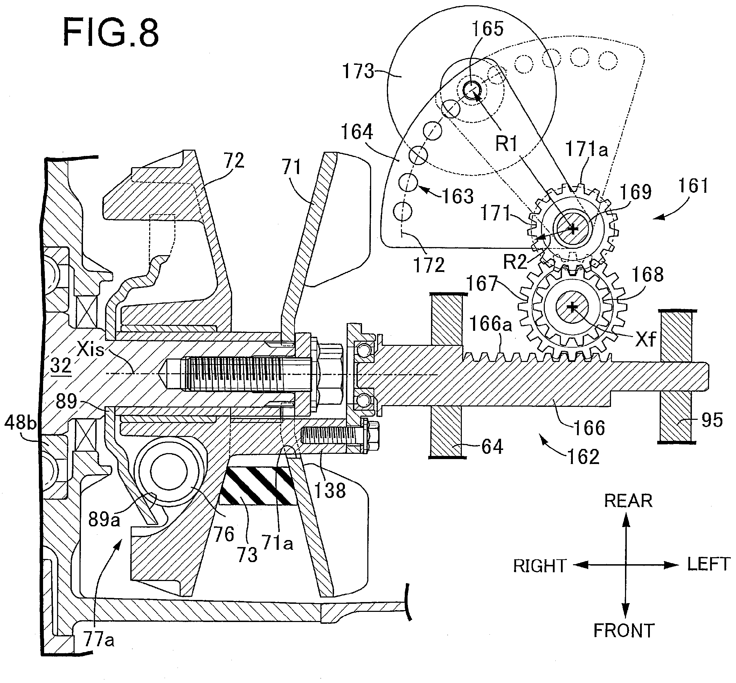

FIG. 8 schematically shows the arrangement of a second shift mechanism 161 related to a third embodiment. The arrangement is the same as that of the first embodiment except for the second shift mechanism 161. Reference numerals and symbols that are the same as those in the first embodiment described above refer to the same arrangement as in the first embodiment, and detailed explanation is omitted.

The second shift mechanism 161 includes a motion conversion mechanism 162 that converts linear movement in the axial direction of the movable sheave 72 into rotational movement around a rotational axis Xf, an amplification member 164 that is linked to the movable sheave 72 through the motion conversion mechanism 162 and has a plurality of restriction bodies 163 moving on a specific trajectory with a defined amount of displacement, and a lock member 165 that is linearly displaced between a first position at which it is in contact with any of the restriction bodies 163 to thus restrict movement of the restriction body 163 and a second position at which it disengages from the restriction body 163 to thus allow movement of the restriction body 163. In the second shift mechanism 161 the rotational axis Xf is disposed in a direction such that it is in tangential contact with an arc concentric with the rotational axis Xis of the crankshaft 32.

The motion conversion mechanism 162 includes a rack 166 that has gear teeth 166a arranged linearly in parallel with the rotational axis Xis at a position shifted from the crankshaft 32 in the axial direction and is supported so that it can be displaced in the axial direction, a pinion 167 that is disposed so that it can rotate around the rotational axis Xf and meshes with the rack 166, and a transmission gear 168 that rotates in synchronism with the pinion 167 around the rotational axis Xf and has a smaller diameter than that of the pinion 167.

The rack 166 is doubly supported, on the case cover 64 and on the conversion mechanism cover 95, so that it can be displaced in parallel with the rotational axis Xis. The gear teeth 166a are disposed in a space between the case cover 64 and the conversion mechanism cover 95. The extremity of the rack 166 is relatively rotatably joined to the ring member 102. The rack 166 is press fitted into an inner race of the ball bearing 111. Movement of the rack 166 with respect to the ring member 102 is restrained in the axial direction.

The amplification member 164 includes a swing shaft 169 that has an axis parallel to the rotational axis Xf, and a follower gear 171 that has gear teeth 171a arranged along an arc concentric with the axis of the swing shaft 169 at a position spaced from the swing shaft 169 in the centrifugal direction. The swing shaft 169 is supported on for example the case cover 64 so that it can rotate around the axis. The transmission gear 168 is made to mesh with the follower gear 171. Linear movement of the rack 166 is thus converted into rotational movement of the amplification member 164.

The amplification member 164 has the restriction bodies 163, which are arranged in one line from the lowest speed level toward the highest speed level along an arc 172 concentric with the axis of the swing shaft 169. The restriction bodies 163 may be arranged at equal intervals. The individual restriction bodies 163 are formed from the edge of a circular opening. In this arrangement, a distance R1 (= radius of the arc 172) from the axis of the swing shaft 113 to the restriction body 163 is set larger than a distance R2 from the axis of the swing shaft 169 to the gear teeth 171a of the follower gear 171. Therefore, the amount of displacement of the gear teeth 171a is amplified according to the distance ratio (= R1/R2) and converted into an amount of displacement of the restriction body 163.

The lock member 165 is formed into a columnar body having an axis parallel to the rotational axis Xf. The lock member 165 is coaxially linked to an operating shaft of a solenoid actuator 173. The solenoid actuator 173 moves the lock member 165 between the first position and the second position by virtue of an electromagnetic force resulting from electric power being supplied. When the lock member 165 is positioned at the second position, the lock member 165 deviates from the trajectory of the restriction body 163. The lock member 165 retreats from the circular opening. When the lock member 165 is positioned at the first position, the lock member 165 is disposed on the trajectory of the restriction body 163. The lock member 165 enters the circular opening.

When realizing a continuously variable transmission function, the solenoid actuator 173 retains the lock member 165 at the first position. The amplification member 164 is positioned at the initial angular position around the axis of the swing shaft 169. The restriction body 163 at the lowest speed level faces the extremity of the lock member 165. Therefore, rotation of the amplification member 164 is allowed. The restriction body 163 moves in response to rotation of the amplification member 164.

When the solenoid actuator 173 is energized and a driving force acts on the lock member 165 from the second position toward the first position, the lock member 165 enters the circular opening via any of the restriction bodies 163. As a result, movement of the restriction body 163 is restricted. Rotation of the amplification member 164 is restrained. Movement of the movable sheave 72 is prevented. As a result, the gear ratio is fixed. In this way, it is possible to switch between a continuously variable transmission function and a fixed gear ratio by virtue of the action of the lock member 165.

## Claims

1. A belt-type continuously variable transmission comprising a fixed sheave (71) that is fixed to a crankshaft (32),
a movable sheave (72) that is supported on the crankshaft (32) so as to be movable in an axial direction of the crankshaft (32) while being made to face the fixed sheave (71),
a belt (73) that is wound around a pulley (67) formed by the fixed sheave (71) and the movable sheave (72),
a speed change member (89) that is relatively non-displaceably disposed with respect to the fixed sheave (71) in the axial direction and has a cam face (89a) that is configured to approach the fixed sheave (71) in going away from a rotational axis (Xis) of the crankshaft (32),
a centrifugal weight (76) that is sandwiched between the speed change member (89) and the movable sheave (72) and that is configured to move along the cam face (89a) in a centrifugal direction in response to an increase in centrifugal force to thus drive the movable sheave (72) in the axial direction,
an amplification member (93, 164) that is mechanically linked to the movable sheave (72) and that rotates around a rotational axis (Xp) and that has a plurality of restriction bodies (92, 163), which are arranged in one line so as to cover a speed range from a lowest speed level to a highest speed level along an arc (118a, 172) that is concentric with the rotational axis (Xp) and which are configured to move on a specific trajectory with an amount of displacement that is obtained by amplifying the amount of displacement in the axial direction of the movable sheave (72), and
a lock member (94, 165) that is linked to a solenoid actuator (78, 173) comprising an operating shaft that has an axis parallel to the rotational axis (Xp), wherein
the lock member (94, 165) is configured to be displaced linearly between
a first position at which the lock member (94, 165) comes into contact with any one of the restriction bodies (92, 163) of the amplification member (93, 164)to thus restrict movement of the restriction body (92, 163), restrict rotation of the amplification member (93, 164) and prevent movement of the movable sheave (72), thereby fixing a gear ratio corresponding to the one restriction body (92, 163), and
a second position at which the lock member (94, 165) disengages from the restriction body (92, 163) to thus allow movement of the restriction body (92, 163).

2. The belt-type continuously variable transmission according to Claim 1, further comprising a first body (115) that supports the lock member (94) at a first position in the axial direction and a second body (116) that supports the lock member (94) at a second position that is spaced from the first position in the axial direction, and the lock member (94) engages with the restriction body (92) between the first body (115) and the second body (116).

3. The belt-type continuously variable transmission according to any one of Claims 1 to 2, further comprising
an elastic body (122) that applies a driving force to the amplification member (93) around the rotational axis (Xp) in a direction in which the movable sheave (72) is moved away from the fixed sheave (71),
wherein the amplification member (93) has a weight distribution such that the amplification member (93) rotates around the rotational axis (Xp) due to an own weight thereof when the lock member (94) is disengaged and such that the amplification member (93) positions the restriction body (92) at the lowest speed level on a path of the lock member (94).

4. The belt-type continuously variable transmission according to any one of Claims 1 to 3, comprising a motion conversion mechanism (91) that has an arm (103) extending from the movable sheave (72) through the fixed sheave (71) and joined to a linking member (102) via an extremity thereof and that converts displacement in the axial direction of the linking member (102) into displacement on the trajectory of the restriction body (92).

## Patentansprüche

1. Stufenloses Riemengetriebe, das aufweist:
eine feste Scheibe (71), die an einer Kurbelwelle (32) fixiert ist,
eine bewegliche Scheibe (72), die auf der Kurbelwelle (32) gehalten wird, so dass sie in einer Axialrichtung der Kurbelwelle (32) beweglich ist, während sie dazu gebracht wird, der festen Scheibe (71) zugewandt zu sein,
einen Riemen (73), der um eine Riemenscheibe (67), die durch die feste Scheibe (71) und die bewegliche Scheibe (72) ausgebildet wird, gewickelt ist,
ein Gangschaltelement (89), das in Bezug auf die feste Scheibe (71) in der Axialrichtung relativ nicht verschiebbar ist und eine Nockenfläche (89a) hat, die konfiguriert ist, um sich beim Weggehen von einer Drehachse (Xis) der Kurbelwelle (32) der festen Scheibe (71) zu nähern,
ein Fliehgewicht(76), das zwischen dem Gangschaltelement (89) und der beweglichen Scheibe (72) eingeschoben ist und das konfiguriert ist, um sich ansprechend auf eine Zunahme der Zentrifugalkraft in einer Zentrifugalrichtung entlang der Nockenfläche (89a) zu bewegen, um auf diese Weise die bewegliche Scheibe (72) in der Axialrichtung anzutreiben,
ein Verstärkungselement (93, 164), das mechanisch mit der beweglichen Scheibe (72) verbunden ist und das sich um eine Drehachse (Xp) dreht und das mehrere Beschränkungskörper (92, 163) hat, die in einer Linie entlang eines Bogens (118a, 172),
der mit der Drehachse (Xp) konzentrisch ist, angeordnet sind, um einen Geschwindigkeitsbereich von einer niedrigsten Geschwindigkeitsstufe bis zu einer höchsten Geschwindigkeitsstufe abzudecken, und die konfiguriert sind, um sich mit einer Verschiebungsgröße, die erhalten wird, indem die Verschiebungsgröße in der Axialrichtung der beweglichen Scheibe (72) verstärkt wird, auf einer spezifischen Trajektorie zu bewegen, und
ein Sperrelement (94, 165), das mit einer magnetischen Stellvorrichtung (78, 173) verbunden ist, die eine Betätigungswelle aufweist, die parallel zu der Drehachse (Xp) ist,
wobei
das Sperrelement (94, 165) konfiguriert ist, um linear verschoben zu werden zwischen einer ersten Position, in der das Sperrelement (94, 165) in Kontakt mit einem beliebigen der Beschränkungskörper (92, 163) des Verstärkungselements (93, 164) kommt, um auf diese Weise die Bewegung des Beschränkungskörpers (92, 163) zu beschränken, die Bewegung des Verstärkungselements (93, 164) zu beschränken und die Bewegung der beweglichen Scheibe (72) zu verhindern, um dadurch ein Übersetzungsverhältnis, das dem einen Beschränkungskörper (92, 163) entspricht, zu fixieren, und
einer zweiten Position, in der das Sperrelement (94, 165) sich von dem Beschränkungskörper (92, 163) löst, um auf diese Weise die Bewegung des Beschränkungskörpers (92, 163) zuzulassen.

2. Stufenloses Riemengetriebe nach Anspruch 1, das ferner aufweist: einen ersten Körper (115), der das Sperrelement (94) in einer ersten Position in der Axialrichtung hält, und einen zweiten Körper (116), der das Sperrelement (94) in einer zweiten Position hält, die von der ersten Position in der Axialrichtung beabstandet ist, und wobei das Sperrelement (94) zwischen dem ersten Körper (115) und dem zweiten Körper (116) mit dem Beschränkungskörper (92) eingreift.

3. Stufenloses Riemengetriebe nach einem der Ansprüche 1 bis 2, das ferner aufweist:
einen elastischen Körper (122), der in eine Richtung, in der die bewegliche Scheibe (72) von der festen Scheibe (71) weg bewegt wird, eine Antriebskraft um die Drehachse (Xp) herum auf das Verstärkungselement (93) anwendet,
wobei das Verstärkungselement (93) eine Gewichtsverteilung hat, so dass das Verstärkungselement (93) sich aufgrund seines Eigengewichts um die Drehachse (Xp) dreht, wenn das Sperrelement (94) gelöst wird, und so dass das Verstärkungselement (93) den Beschränkungskörper (92) auf einem Weg des Sperrelements (94) auf der niedrigsten Geschwindigkeitsstufe positioniert.

4. Stufenloses Riemengetriebe nach einem der Ansprüche 1 bis 3, das einen Bewegungsumwandlungsmechanismus (91) aufweist, der einen Arm (103) hat, der sich von der beweglichen Scheibe (72) durch die feste Scheibe (71) erstreckt und über sein äußerstes Ende mit einem Verbindungselement (102) verbunden ist, und der die Verschiebung in der Axialrichtung des Verbindungselements (102) in die Verschiebung auf der Trajektorie des Beschränkungskörpers (92) umwandelt.

## Revendications

1. Transmission à variation continue du type à courroie comprenant
un réa fixe (71) qui est fixé à un vilebrequin (32),
un réa mobile (72) qui est supporté sur le vilebrequin (32) de manière à pouvoir être déplacé dans une direction axiale du vilebrequin (32) tout en étant amené à être tourné vers le réa fixe (71),
une courroie (73) qui est enroulée autour d'une poulie (67) formée par le réa fixe (71) et le réa mobile (72),
un élément de changement de vitesse (89) qui est disposé de manière relativement non déplaçable par rapport au réa fixe (71) dans la direction axiale et présente une face de came (89a) qui est configurée pour s'approcher du réa fixe (71) en s'éloignant d'un axe rotationnel (Xis) du vilebrequin (32),
un poids centrifuge (76) qui est pris en sandwich entre l'élément de changement de vitesse (89) et le réa mobile (72) et qui est configuré pour se déplacer le long de la face de came (89a) dans une direction centrifuge en réponse à une augmentation de la force centrifuge pour ainsi entraîner le réa mobile (72) dans la direction axiale,
un élément d'amplification (93, 164) qui est relié mécaniquement au réa mobile (72) et qui tourne autour d'un axe rotationnel (Xp) et qui présente une pluralité de corps de restriction (92, 163), qui sont agencés en une ligne de manière à couvrir une plage de vitesses allant d'un niveau de vitesse le plus bas à un niveau de vitesse le plus haut le long d'un arc (118a, 172) qui est concentrique avec l'axe rotationnel (Xp) et qui sont configurés pour se déplacer sur une trajectoire spécifique avec une quantité de déplacement qui est obtenue par amplification de la quantité de déplacement dans la direction axiale du réa mobile (72), et
un élément de verrouillage (94, 165) qui est relié à un actionneur de solénoïde (78, 173) comprenant un arbre de commande qui présente un axe parallèle à l'axe rotationnel (Xp), dans laquelle
l'élément de verrouillage (94, 165) est configuré pour être déplacé linéairement entre 165) vient en contact avec l'un quelconque des corps de restriction (92, 163) de l'élément d'amplification (93, 164) pour restreindre ainsi le mouvement du corps de restriction (92, 163), restreindre la rotation de l'élément d'amplification (93, 164) et empêcher le mouvement du réa mobile (72), fixant de ce fait un rapport de transmission correspondant à l'un corps de restriction (92, 163), et
une deuxième position au niveau de laquelle l'élément de verrouillage (94, 165) se dégage du corps de restriction (92, 163) pour permettre ainsi un mouvement du corps de restriction (92, 163).

2. Transmission à variation continue du type à courroie selon la revendication 1, comprenant en outre un premier corps (115) qui supporte l'élément de verrouillage (94) au niveau d'une première position dans la direction axiale et un deuxième corps (116) qui supporte l'élément de verrouillage (94) au niveau d'une deuxième position qui est espacée de la première position dans la direction axiale, et l'élément de verrouillage (94) s'engage avec le corps de restriction (92) entre le premier corps (115) et le deuxième corps (116).

3. Transmission à variation continue du type à courroie selon l'une quelconque des revendications 1 à 2, comprenant en outre
un corps élastique (122) qui applique une force d'entraînement à l'élément d'amplification (93) autour de l'axe rotationnel (Xp) dans une direction dans laquelle le réa mobile (72) est déplacé à distance du réa fixe (71),
dans laquelle l'élément d'amplification (93) présente une distribution de poids telle que l'élément d'amplification (93) tourne autour de l'axe rotationnel (Xp) en raison d'un poids propre de celui-ci lorsque l'élément de verrouillage (94) est dégagé et de telle sorte que l'élément d'amplification (93) positionne le corps de restriction (92) au niveau de vitesse le plus bas sur une voie de l'élément de verrouillage (94).

4. Transmission à variation continue du type à courroie selon l'une quelconque des revendications 1 à 3, comprenant un mécanisme de conversion de mouvement (91) qui présente un bras (103) s'étendant à partir du réa mobile (72) à travers le réa fixe (71) et relié à un élément de liaison (102) par le biais d'une extrémité de celui-ci et qui convertit un déplacement dans la direction axiale de l'élément de liaison (102) en déplacement sur la trajectoire du corps de restriction (92).
